# EUROPÄISCHE PATENTSCHRIFT

(11) **EP 1 385 382 B1**
(45) Veröffentlichungstag und Bekanntmachung des Hinweises auf die Patenterteilung: **01.07.2009**
(21) Anmeldenummer: 02755444.3
(22) Anmeldetag: 09.08.2002
(51) Int. Cl.: A21B 1/26, A21B 1/40

(54) **BACKOFEN**
BAKING OVEN
FOUR DE CUISSON

(30) Priorität: 01.10.2001 DE 10148548
(43) Veröffentlichungstag der Anmeldung: 04.02.2004
(73) Patentinhaber: MIWE Michael Wenz GmbH, 97450 Arnstein (DE)
(72) Erfinder: KERLER, Ernst, 97450 Gänheim (DE); KOOS, Michael, 97450 Heugrumbach (DE); HOLZINGER, Leo, 97450 Schwebenried (DE)
(74) Vertreter: Patentanwälte Freischem
(86) Internationale Anmeldenummer: PCT/IB2002/003171
(87) Internationale Veröffentlichungsnummer: WO 2002/089588

(56) Entgegenhaltungen:
- EP-A- 0 110 618
- EP-A- 0 452 279
- EP-A- 0 909 533
- WO-A-84/01266
- DE-A- 3 020 374
- DE-A- 3 508 747
- DE-U- 7 826 137
- DE-U- 7 837 850
- DE-U- 29 609 771
- FR-A- 2 094 630
- FR-A- 2 535 036
- GB-A- 1 038 849
- US-A- 5 937 845

## Beschreibung

Die Erfindung betrifft einen Backofen, insbesondere Backschrank, gemäß dem Oberbegriff des Patentanspruchs 1. Im Ergebnis wird dadurch ein geschlossener Heizkreislauf gebildet, in dem das Heizmedium, beispielsweise Luft, zirkuliert.

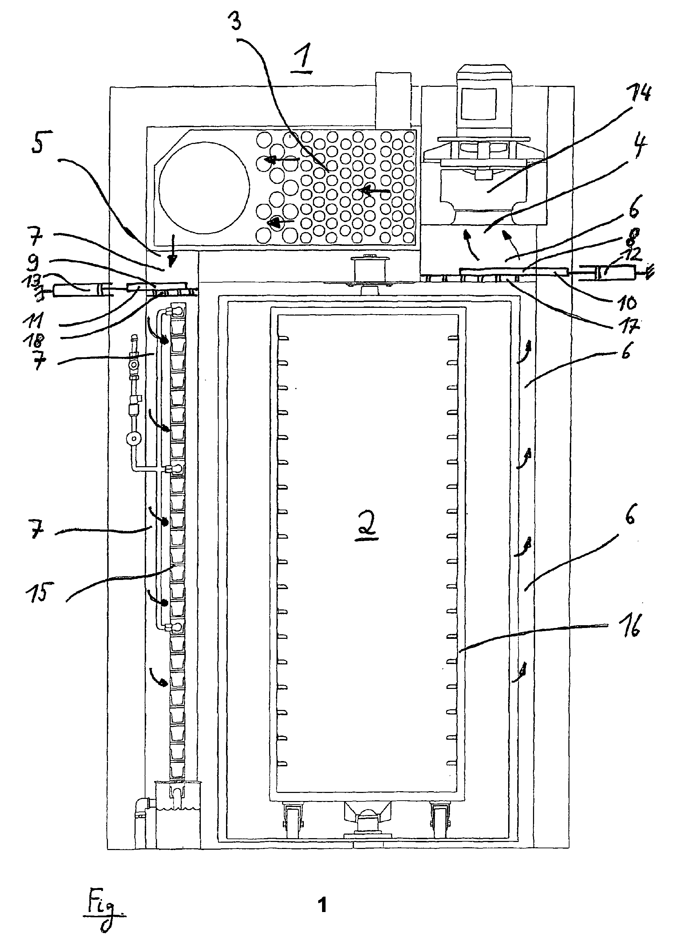

Die Druckschrift DE-A-3020374 zeigt einen Backofen der genannten Art mit einer Umsteuervorrichtung für den Luftstrom. In der Ausführungsform gemäß den Figuren 3 und 4 dieser Druckschrift sind schwenkbare Wände seitlich der Backkammer angeordnet, welche zwischen zwei Schwenkstellungen umschwenkbar sind. In der ersten Schwenkstellung ist die rechte Seite der Backkammer mit der Druckseite des Gebläses und die linke Seite mit dessen Saugseite verbunden. Durch Verschwenken in die zweite Schwenkstellung wird die linke Seite der Backkammer mit der Druckseite des Gebläses und die rechte Seite mit dessen Saugseite verbunden. Verstellbare Anschläge ermöglichen eine Variierung der Schrägstellung der Wände, um eine gleichmäßige Beaufschlagung aller Etagen eines Hordenwagens in der Backkammer mit Heißluft zu erreichen. Eine Drosselung ist mit der Umsteuervorrichtung der genannten Druckschrift nicht möglich. Der kleinste Querschnitt entlang des Strömungsweges seitlich der Backkammer wird durch das untere Ende jeder seitlichen Wand definiert, welches fest ist und keine Querschnittsänderung zulässt. Auch die Schieber in den seitlichen Wänden gemäß den Figuren 5 und 6 ermöglichen keine Drosselung der Heißluftströmung zur Backkammer, sondern lediglich eine Veränderung der Strömungsverteilung über die Höhe der Backkammer.

Ein Backofen mit geschlossenem Heizkreislauf ist aus der DE 197 45 515 A1 bekannt. Der dort beschriebene Backofen weist eine Backkammer auf, in der mittels Heißluft der Backvorgang durchgeführt wird. Hierzu ist ein Heizregister (Einheit zur Erhitzung von Luft, Wärmetauscher) vorgesehen, das im oberen Bereich des Backofens angeordnet ist.

Das Heizregister weist einen von einem Elektromotor angetriebenen Ventilator auf, der über einen ersten Strömungskanal Luft aus der Backkammer ansaugt und Heizelementen zuführt sowie die erhitzte Luft über einen zweiten Strömungskanal vom Heizregister in die Backkammer leitet. Zum Backen wird die Backkammer von der heißen Luft also durchströmt.

Grundsätzlich ist es bei der Bauweise gattungsgemäßer Backöfen lediglich erforderlich, dass ein Strömungskanal vorhanden ist. In diesem Fall wird die Heizeinheit mit ihrem Einlass oder Auslass direkt an der Backkammer angeschlossen.

Bei Backöfen dieser Art hat es sich als schwierig erwiesen, eine genaue Regelung der Menge des Heizmediums zu bewerkstelligen, mit der das Heizregister die Backkammer versorgt. Die DE 197 45 515 A1 schlägt hierzu vor, die von dem Elektromotor, der den Ventilator antreibt, aufgebrachte Leistung zu erfassen und zur Regelung der Luftumwälzung heranzuziehen. Problematisch ist in diesem Zusammenhang der relativ hohe apparative und regelungstechnische Aufwand.

Alternativ zu der in der DE 197 45 515 A1 beschriebenen Lösung wurden auch schon Backöfen vorgeschlagen, bei denen zur variablen Reduzierung bzw. Erhöhung der Umwälzmenge Veränderungen an der Lüfterspirale oder dem Lüfter selbst vorgenommen wurden. Diese Veränderungen betrafen insbesondere die Ansaugdüsen des Lüfters oder die Spiralform der Lüfterspirale. Auch die Verwendung von variabel verstellbaren Lüfterschaufeln wurde bereits diskutiert.

Die Druckschrift DE-U-78 26 137 offenbart einen Backofen, bei dem die Zu- bzw. Abführungskanäle als Verteilerkammern ausgebildet sind, die mittels Hohlkörpern, z.B. Rohrstücken, mit der Backkammer verbunden sind. Die Rohrstücke sind über manuelle Verstellvorrichtungen von außen verschiebbar und erlauben es, die Verteilung der Strömung und Wärme über die Tiefe und Höhe der Backkammer von außen zu beeinflussen. Eine Beeinflussung der gesamten zum Backofen strömenden Heißgasmenge, insbesondere eine automatische Regelung dieser Menge wird nicht ermöglicht.

Die Druckschrift FR-A-2 094 630 offenbart in der Ausführungsform der Fig. 1 einen Backofen, bei dem die Druckseite eines Ventilators mit einem Zwischenraum verbunden ist, der zu beiden Seiten durch Wandelemente mit einer Vielzahl von Löchern begrenzt ist, die in die Backkammer münden. Auf den Wandelementen sind Eckbleche aufgeschraubt, die ebenfalls mit Löchern versehen sind und die nach dem Lösen von in der Backkammer befindlichen Flügelmuttern verschiebbar und in veränderter Position festschraubbar sind. Hierdurch kann die Menge des in die Backkammer einströmenden Heißgases verstellt werden. Die Eckbleche lassen sich nur manuell bei geöffnetem Backofen verstellen, da hierzu die Flügelmuttern in der Backkammer gelöst werden müssen.

Die Druckschrift DE 78 37 850 U1 offenbart einen Kammerbackofen mit einer Backkammer, einer Heißluftumwälzheizung mit mindestens einem Umwälzventilator sowie einem Heizgaszuführ- und einem Heizgasabführkanal an der Backkammer, bei dem ein Drosselorgan, beispielsweise eine Drosselklappe oder ein Drosselschieber, mit Hebel und Zugstange wahlweise im Heizgaszuführkanal und/oder im Heizgasabführkanal angeordnet ist.

Der Erfindung liegt die Aufgabe zugrunde, einen Backofen der eingangs genannten Art so weiterzuentwickeln, dass es möglich wird, mit möglichst geringem Aufwand eine exakte Regelung der Menge des Heizmediums, mit der die Backkammer versorgt wird, zu erreichen, und dass auch ein günstiger Betrieb beim Einsatz von Dampf ermöglicht wird.

Ferner soll die Störanfälligkeit infolge eines möglichst einfachen apparativen Aufbaus gering sein.

Die **Lösung** dieser Aufgabe wird durch die Gesamtheit der Merkmale des Patentanspruchs 1 erreicht.

Die Erfindung sieht also an zumindest einer Stelle jedes Strömungskanals, in dem das Heizmedium strömt, eine Drossel vor, die die Strömung im Kanal verändern kann. Selbstverständlich können in einem Strömungskanal aber auch mehrere Drosseln vorgesehen sein.

Wird eine Bauweise gewählt, bei der die Einheit zur Erhitzung des Heizmediums direkt an die Backkammer anschließt, so dass die Länge des einen Strömungskanals gegen Null tendiert, so kann die Drossel auch entlang solcher sehr kurzen Strömungskanäle angeordnet werden. Bei Ladenbacköfen sind beispielsweise Bauweisen bekannt, bei denen die Luft aus der Backkammer durch eine Öffnung in einer der Wandungen der Backkammer direkt in das Heizgebläse abgesaugt wird. Zur Realisierung der Drossel kann in diese Ausnehmung dann beispielsweise ein Schieber eingebaut werden, mit dem der Strömungsquerschnitt der Ausnehmung verkleinert bzw. vergrößert werden kann.

Das Drosselelement im ersten Strömungskanal kann vorteilhafterweise in unmittelbarer Nähe zur Einheit zur Erhitzung des Heizmediums angeordnet sein.

Das Drosselelement im zweiten Strömungskanal kann vorzugsweise auch in unmittelbarer Nähe zur Einheit zur Erhitzung des Heizmediums angeordnet werden.

Je mindestens ein Drosselelement ist in jedem der beiden Strömungskanäle angeordnet, womit sich insbesondere der Vorteil erzielen lässt, dass die Backkammer hermetisch vom Heizregister abgeriegelt werden kann, was beim Einsatz sog. Schwadenapparate hilfreich ist.

Zur Erzielung eines besonders einfachen Aufbaus kann das Drosselelement einen Schieber aufweisen, mit dem zumindest ein Teil des Querschnitts des Strömungskanals abgedeckt werden kann. Der Schieber steht mit einem Betätigungselement in Verbindung, wobei ein elektrisches, ein pneumatisches oder ein hydraulisches Betätigungselement zum Einsatz kommt.

Bevorzugt ist ferner der Ventilator des Heizregisters in unmittelbarer Nähe zum ersten Strömungskanal angeordnet. Soweit erforderlich können auch mehrere Ventilatoren zur Umwälzung des Heizmediums vorgesehen sein.

Weiterhin ist der Backofen mit einem oder mit mehreren Schwadenapparaten ausgestattet, mit denen durch Zugabe von Wasser in den Heißluftstrom Dampfschwaden erzeugt werden können.

Welches Heizmedium zur Beheizung des Backraums verwendet wird, ist grundsätzlich beliebig. Besonders vorteilhaft ist die Verwendung von Luft, da dieses Heizmedium keinen negativen Einfluss auf die Backwaren hat. Die Luft kann dabei beispielsweise beim Durchströmen eines Wärmetauschers oder beim Überströmen einer elektrischen Heizwendel aufgeheizt werden. Alternativ zur Luft ist es auch denkbar, dass die Verbrennungsgase eines Gasbrenners als Heizmedium verwendet werden.

Der erfindungsgemäße Backofen ist einfach aufgebaut; trotzdem ist sichergestellt, dass eine einfache und genaue Einstellung der Luftmenge, die die Backkammer durchströmt, ermöglicht ist.

In der Zeichnung ist ein Ausführungsbeispiel der Erfindung dargestellt.

Die einzige Figur zeigt schematisch den Schnitt durch einen Backofen, der als Backschrank ausgebildet ist.

Der Backofen 1 weist eine Backkammer 2 auf, in der das zu backende Gut eingebracht wird. Im Ausführungsbeispiel ist ein Wagen 16 vorgesehen, der eine Vielzahl von Backblechen aufnehmen kann und der in die Backkammer 2 hineingeschoben werden kann. Das Backen erfolgt durch heiße Luft, die in einer Einheit 3 zur Erhitzung von Luft (Wärmetauscher, Heizregister) erzeugt wird. Die heiße Luft wird dabei im geschlossenen Kreislauf durch die Backkammer 2 geleitet, der Backofen wird also im Umluftverfahren betrieben. Hierzu steht die Backkammer 2 über einen ersten Strömungskanal 6 mit dem Heizregister 3 in Verbindung, wobei der Strömungskanal 6 am Luft-Einlass 4 des Heizregisters 3 endet.

Weiterhin ist ein zweiter Strömungskanal 7 vorgesehen, der das Heizregister 3 mit der Backkammer 2 verbindet; der Strömungskanal 7 beginnt am Luft-Auslass 5 des Heizregisters 3. Der Transport der Luft erfolgt durch einen Ventilator 14. Damit ergibt sich eine Luftzirkulation, die durch die Pfeile in der Figur angedeutet ist.

Zur einfachen und genauen Einstellung der Luftmenge, die durch die Backkammer 2 geleitet wird, befinden sich zwei Drosselelemente 8 und 9 im Strömungsbereich. Die Drossel 8 ist im ersten Strömungskanal 6 angeordnet, und zwar direkt unterhalb des Luft-Einlasses 4 des Heizregisters 3, also unterhalb des Ventilators 14. Die zweite Drossel 9 befindet sich am Luft-Auslass 5 des Heizregisters 3, also -in Strömungsrichtung betrachtet- am Anfang des zweiten Strömungskanals 7.

Die Drosseln 8,9 sind dabei einfach aufgebaut: Auf einer Bodenplatte 17 bzw. 18, die eine Vielzahl von Durchtrittsöffnungen aufweist, ist ein Schieber 10 bzw. 11 angeordnet. Dieser Schieber 10 bzw. 11 steht mit einem Betätigungselement 12 bzw. 13 in Verbindung. In der Figur ist das Betätigungselement 12 bzw. 13 schematisch als Kolben-Zylinder-Einheit skizziert. Zumeist dürfte jedoch eine elektromotorisch betriebene Betätigung in Frage kommen.

Durch Aktivierung der Betätigungselemente 12 bzw. 13 kann der Schieber 10 bzw. 11 so verschoben werden, dass der Querschnitt des Strömungskanals 6 bzw. 7 mehr oder weniger abgedeckt oder freigegeben wird. Wird der Schieber 10 bzw. 11 ganz aus dem Strömungskanal 6 bzw. 7 herausgezogen, besteht insoweit kein Strömungswiderstand im Strömungskanal 6 bzw. 7, so dass eine größtmögliche Menge Heißluft pro Zeiteinheit die Backkammer 2 durchströmen kann.

Wird der Schieber 10 bzw. 11 jedoch in den Strömungskanal 6 bzw. 7 hineingeschoben, stellt er einen Strömungswiderstand dar, der zu einer Reduzierung des Luftdurchsatzes führt. Je nach Stellung des Schiebers 10 bzw. 11 verändert sich also der Strömungswiderstand im System, wodurch mehr oder weniger Luft pro Zeiteinheit gefördert wird.

Die Einstellung der Heißluftmenge, die pro Zeiteinheit die Backkammer durchströmt und die für den Backprozess entscheidend ist, kann daher in einfacher Weise geregelt werden. Eine Einflussnahme auf die Ansteuerung des Motors des Ventilators 14 ist damit entbehrlich. Vielmehr kann der Elektromotor des Ventilators 14 mit konstanter Leistung versorgt werden.

Die spezielle Anordnung der beiden Drosselelemente 8 und 9 mit ihren Schiebern 10 und 11 ermöglicht vor allem auch einen günstigen Betrieb beim Einsatz von Dampf. Der Backofen 1 ist mit einem Schwadenapparat 15 ausgestattet, mit dem Wasser in den Heißluftstrom zugegeben werden kann. Der so entstehende Dampf unterstützt den Backvorgang.

Durch das völlige Verschließen der Strömungsquerschnitte der Strömungskanäle 6 und 7 durch völliges Einfahren der Schieber 10 und 11 kann die Backkammer 2 vom Heizregister 3 hermetisch abgeriegelt werden.

Bei Aktivierung des Schwadenapparats 15 verbleibt der entstehende Dampf in der Backkammer 2 ; er kann nicht nach oben in den Bereich des Heizregisters 3 entweichen, sondern er steht für den eigentlichen Backvorgang, für den er benötigt wird, zur Verfugung. Ohne die hermetische Verriegelung würde der Dampf nach oben in das Heizregister entweichen und so für den Backvorgang verloren gehen.

## Patentansprüche

1. Backofen (1), insbesondere Backschrank, der aufweist :
- eine Backkammer (2), in die das zu backende Gut eingebracht werden kann,
- eine Einheit (3) zur Erhitzung eines gasförmigen Heizmediums, insbesondere von Luft, die einen Einlass (4) zur Aufnahme des Heizmediums aus der Backkammer (2) und einen Auslass (5) zur Abgabe des geheizten Heizmediums in die Backkammer (2) aufweist,
- einen ersten Strömungskanal (6) zur Leitung des Heizmediums zwischen der Backkammer (2) und dem Einlass (4) und einen zweiten Strömungskanal (7) zur Leitung des Heizmediums zwischen dem Auslass (5) und der Backkammer (2),
- ein Drosselelement (8), das im ersten Strömungskanal (6) angeordnet ist,
- ein Drosselelement (9), das im zweiten Strömungskanal (7) angeordnet ist, wobei mit den Drosselelementen (8,9) der Strömungswiderstand im jeweiligen Strömungskanal (6,7) verändert werden kann
**dadurch gekennzeichnet, dass**
- der Backofen (1) einen Schwadenapparat (15) aufweist,
- ein elektrisch, pneumatisch oder hydraulisch angetriebenes Betätigungselement (12,13) jedes Drosselelement (8,9) derart betätigt, dass der Querschnitt des Strömungskanals (6, 7) mehr oder weniger abgedeckt oder freigegeben wird und
- die Drosselelemente (8,9) bei völligem Verschließen der Strömungsquerschnitte der Strömungskanäle (6, 7) die Backkammer (2) vom Heizregister (3) hermetisch abriegeln.

2. Backofen nach Anspruch 1, **dadurch gekennzeichnet, dass** das Drosselelement (8) im ersten Strömungskanal (6) in unmittelbarer Nähe zur Einheit (3) zur Erhitzung des Heizmediums angeordnet ist.

3. Backofen nach Anspruch 1 oder 2, **dadurch gekennzeichnet, dass** das Drosselelement (9) im zweiten Strömungskanal (7) in unmittelbarer Nähe zur Einheit (3) zur Erhitzung des Heizmediums angeordnet ist.

4. Backofen nach einem der vorangehenden Ansprüche, **dadurch gekennzeichnet, dass** das Drosselelement (8,9) einen Schieber (10,11) aufweist, mit dem der Querschnitt des Strömungskanals (6,7) abgedeckt werden kann.

5. Backofen nach einem der vorangehenden Ansprüche, **dadurch gekennzeichnet, dass** die Einheit zur Erhitzung des Heizmediums (3) einen Ventilator (14) aufweist, der insbesondere in unmittelbarer Nähe zum ersten Strömungskanal (6) angeordnet ist.

6. Backofen nach einem der vorangehenden Ansprüche, **dadurch gekennzeichnet, dass** als Heizmedium Verbrennungsgas eines Gasbrenners verwendet wird.

7. Backofen nach einem der vorangehenden Ansprüche, **dadurch gekennzeichnet, dass** als Heizmedium Luft verwendet wird, die beim Durchströmen eines Wärmetauschers oder beim Überströmen einer elektrischen Heizwendel aufgeheizt wird.

8. Backofen nach einem der vorangehenden Ansprüche, **dadurch gekennzeichnet, dass** der Backofen in der Art eines Stikkenofens oder in der Art eines Ladenbackofens ausgebildet ist.

## Claims

1. A baking oven (1), in particular a baking cabinet, comprising:
- a baking chamber (2) into which the goods to be baked can be introduced,
- a unit (3) for heating a gaseous heating medium, in particular air, having an inlet (4) for receiving the heating medium from the baking chamber (2) and an outlet (5) for dispensing the heated heating medium into the baking chamber (2),
- a first flow channel (6) for conveying the heating medium between the baking chamber (2) and the inlet (4) and a second flow channel (7) for conveying the heating medium between the outlet (5) and the baking chamber (2),
- a throttle element (8) arranged in the first flow channel (6),
- a throttle element (9) arranged in the second flow channel (7), wherein the flow resistance in the respective flow channel (6, 7) can be altered with said throttle elements (8,9),
**characterized in that**
- the baking oven (1) comprises a steam vapour apparatus (15);
- an electrically, pneumatically or hydraulically driven operating element (12, 13) operates each throttle element (8, 9) such that the cross section of the flow channel (6,7) is covered or uncovered to a greater or lesser extent, and
- the throttle elements (8,9) hermetically seal the baking chamber (2) from the heating register (3) when completely closing the flow cross sections of the flow channels (6, 7).

2. The baking oven according to claim 1, **characterized in that** the throttle element (8) is arranged in the first flow channel (6) in the immediate vicinity of the unit (3) for heating the heating medium.

3. The baking oven according to claim 1 or 2, **characterized in that** the throttle element (9) is arranged in the second flow channel (7) in the immediate vicinity of the unit (3) heating the heating medium.

4. The baking oven according to one of the preceding claims, **characterized in that** the throttle element (8, 9) has a slide valve (10, 11) with which the cross section of the flow channel (6, 7) can be covered.

5. The baking oven according to one of the preceding claims, **characterized in that** the unit for heating the heating medium (3) has a ventilating fan (14) which is situated in particular in the immediate vicinity of the first flow channel (6).

6. The baking oven according to one of the preceding claims, **characterized in that** combustion gas from a gas burner is used as the heating medium.

7. The baking oven according to one of the preceding claims, **characterized in that** air which is heated as it flows through a heat exchanger or as it flows over an electric heating coil is used as the heating medium.

8. The baking oven according to one of the preceding claims, **characterized in that** the baking oven is designed in the manner of a rack oven or in the manner of a shop baking oven.

## Revendications

1. Four de cuisson (1), notamment armoire de cuisson, comprenant :
- une enceinte de cuisson (2) apte à recevoir le produit à cuire,
- une unité (3) de chauffage d'un agent caloporteur gazeux, notamment de l'air, qui présente une entrée (4) pour l'admission de l'agent caloporteur provenant de l'enceinte de cuisson (2) et une sortie (5) pour l'évacuation de l'agent caloporteur chauffé en direction de l'enceinte de cuisson (2),
- un premier canal d'écoulement (6) pour conduire l'agent caloporteur entre l'enceinte de cuisson (2) et l'entrée (4) et un second canal d'écoulement (7) pour conduire l'agent caloporteur entre la sortie (5) et l'enceinte de cuisson (2),
- un élément d'étranglement (8), qui est agencé dans le premier canal d'écoulement (6),
- un élément d'étranglement (9), qui est agencé dans le second canal d'écoulement (7),
les éléments d'étranglement (8, 9) permettant respectivement de faire varier la résistance à l'écoulement dans les canaux d'écoulement (6, 7)
**caractérisé en ce que**
- le four de cuisson (1) comporte un appareil à buée (15),
- un organe d'actionnement (12, 13) à commande électrique, pneumatique ou hydraulique actionne chaque élément d'étranglement (8, 9) de manière à obturer ou dégager plus ou moins la section transversale du canal d'étranglement (6, 7) et
- les éléments d'étranglement (8, 9), lorsqu'ils obturent totalement la section d'écoulement des canaux d'écoulement (6, 7), isolent hermétiquement l'enceinte de cuisson (2) de la batterie de chauffe (3).

2. Four de cuisson selon la revendication 1, **caractérisé en ce que** l'élément d'étranglement (8) est agencé dans le premier canal d'écoulement (6) à proximité directe de l'unité (3) de chauffage de l'agent caloporteur.

3. Four selon la revendication 1 ou la revendication 2, **caractérisé en ce que** l'élément d'étranglement (9) est agencé dans le second canal d'écoulement (7) à proximité directe de l'unité (3) de chauffage de l'agent caloporteur.

4. Four de cuisson selon l'une quelconque des revendications précédentes, **caractérisé en ce que** l'élément d'étranglement (8, 9) comporte un tiroir (10, 11) apte à couvrir la section transversale du canal d'écoulement (6, 7).

5. Four de cuisson selon l'une quelconque des revendications précédentes, **caractérisé en ce que** l'unité de chauffage de l'agent caloporteur (3) comporte un ventilateur (14) qui est agencé notamment à proximité directe du premier canal d'écoulement (6).

6. Four de cuisson selon l'une quelconque des revendications précédentes, **caractérisé en ce que** l'agent caloporteur employé consiste en les gaz de combustion d'un brûleur à gaz.

7. Four de cuisson selon l'une quelconque des revendications précédentes, **caractérisé en ce que** l'agent caloporteur employé est l'air, lequel air est échauffé alors qu'il traverse un échangeur de chaleur ou qu'il circule le long d'un serpentin de chauffage électrique.

8. Four de cuisson selon l'une quelconque des revendications précédentes, **caractérisé en ce que** le four de cuisson est conçu sous la forme d'un four à chariot ou d'un four de cuisson de magasin.
